# EUROPEAN PATENT APPLICATION

(11) **EP 3 163 814 A1**
(43) Date of publication of application: **03.05.2017**
(21) Application number: 15306736.8
(22) Date of filing: 30.10.2015
(51) Int. Cl.: H04L 12/801, H04L 12/851, H04L 12/807, H04L 12/841, H04L 12/825

(54) **DETERMINISTIC TUNNEL FOR QOS MANAGEMENT IN PACKET-SWITCHED NETWORK**

(71) Applicant: ALCATEL LUCENT, 92100 Boulogne-Billancourt (FR)
(72) Inventor: LECLERC, Brice, 91620 NOZAY (FR); MARCE, Olivier, 91620 NOZAY (FR)
(74) Representative: Novagraaf Technologies

(57) **Abstract**

This invention relates to an emitting node (N1) of a packet-switched network having forwarding resources to emit an output dataflow (DT) to a receiving node (N4) through said packet-switched network, said output dataflow being made of a sequence of output datagrams, and said emitting node being characterized in that it is adapted
- for determining for each of said output datagrams, emission dates corresponding to available windows of the forwarding resources of each nodes (N1, N2, N3) of a predetermined path between said emitting and receiving nodes, so as to constitute a coherent flow between said emitting and receiving nodes, and,
- for scheduling input datagrams corresponding to input dataflows (F1, F2, F3, F4), each input dataflow being associated with a requirement of quality of service, to said output dataflow (DT) according to said requirements.

## Description

### FIELD OF THE INVENTION

The invention relates to the technical field of packet-switched communication networks and more precisely to the handling of QoS associated with dataflows transmitted over such networks.

### BACKGROUND OF THE INVENTION

Packed-switched communication network are used for applications which require higher and higher quality of service (QoS) and quality of the user experience. These applications comprise video streaming or video-on-demand (VoD), video-conferencing, gaming, etc.

From a technical perspective, these applications require that the data are transmitted from the source to the recipient with the smallest transmission time (or "latency") and with good QoS characteristics (jitter, packet loss...), whereas the quantity of data to be transmitted increases year after year both because of the increasing need for quality (high definition videos, etc.) and because of the increasing number of people connected to communication networks.

Accordingly, many efforts have been undertaken in the recent years for increasing the bandwidth of the communication network. In 15 years, it is said that the overall bandwidth has been increased by around 1000 on access, wireless and core networks.

Nonetheless, the end-to-end latency did not follow the same improvement, and the handling of QoS for the transmissions of data flows from end to end is still an open issue.

For instance, some applications are not very sensitive to latency. For instance, for applications like video streaming or large file downloading, the bandwidth is the major factor but they can suffer some end-to-end delay without QoS and user experience impacts. However, some applications are on the contrary very sensible to latency. This is notably the case for applications implying interactivity like online gaming, remote controlling, high-frequency computing etc. For such applications, the end-to-end transmission time is the crucial factor, with a direct and important impact on QoS and user experience.

Therefore, the applications requiring interactivity or, more generally, requiring low latency, face difficulties to be deployed in good conditions. Some ad-hoc solutions (e.g. adapted for a given type of application) are sometimes elaborated but they cannot be generalized to other applications and are not sufficient in terms of latency reduction.

Some solutions have been proposed to improve the situation for handling dataflows requiring a certain QoS. These solutions include "Differentiated Services" as defined by the RFC 3246 of the IETF (Internet Engineering Task Force), or VLAN QoS, also called "Hierarchical QoS" (H-QoS).

These solutions provide mechanisms to set priorities among dataflows. However, even for dataflows having a high priority, they do not guarantee that they won't experiment contention latency, because of other dataflows, with higher, equal or lower priorities.

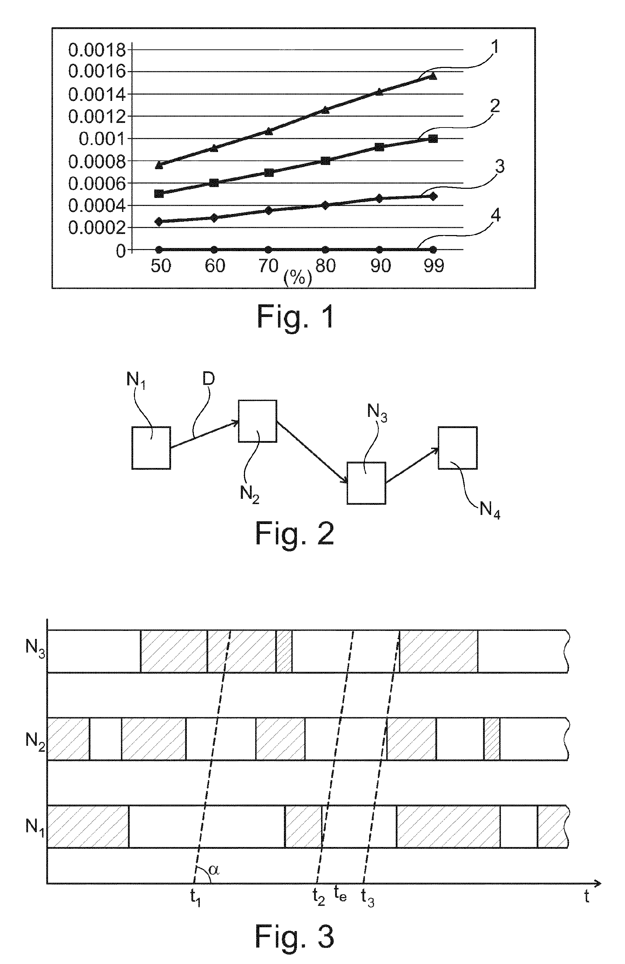

FIG. 1 shows the results of a simulation. It evaluates the impact of EF flows aggregations coming from 10 input ports toward a given output port in a network equipment when the distribution of the flows between "Expedited Forwarding" (EF) and regular "Best Effort" (BF) vary for a given traffic. The contention delay for a node (i.e. the latency for one node) is depicted in seconds on a vertical axis as a function of the load of the node, expressed in percentage of the maximum load.

The curves 1, 2, 3 depict the use of the DiffServ EF mechanism with 3 different mixes between "Expedited Forwarding" (EF) and regular "Best Effort" (BF):
Curve 1: EF = 30% and BF = 70%
Curve 2:EF = 20% and BF = 80%
Curve 3:EF = 10% and BF = 90%

It shows that Expedited Forwarding does not solve the contention issue.

Furthermore, these solutions are based on priorities, or "classes", which should be properly managed by traversed network nodes. These classes behold to a set determined in advance, e.g. by standardization. Accordingly they are not flexible and cannot adapt to application-driven priority mechanisms.

### SUMMARY OF THE INVENTION

The object of the present invention is to alleviate at least partly the above mentioned drawbacks.

This object is achieved with an emitting node of a packet-switched network having forwarding resources to emit an output dataflow to a receiving node through said packet-switched network, said output dataflow being made of a sequence of output datagrams and said emitting node being characterized in that it is adapted
- for determining for each of said output datagrams, emission dates corresponding to available windows of the forwarding resources of each nodes of a predetermined path between said emitting and receiving nodes, so as to constitute a coherent flow between said emitting and receiving nodes, and
- for scheduling input datagrams corresponding to input dataflows, each input dataflow being associated with a requirement of quality of service, to said output dataflow according to said requirements.

Preferred embodiments comprise one or more of the following features, which can be taken separately or together, either in partial combination or in full combination:
- at least one of said input dataflow is a coherent flow;
- the emitting node is further adapted to detect that a given input dataflow cannot be scheduled to said output dataflow and to inform the source of said input dataflow;
- the emitting node is further adapted to determine requirements of quality of service of at least one of said input dataflows;
- the emitting node is further adapted to receive requirements of quality of service of at least one of said input dataflows from the source of said at least one of said input dataflow;
- said input datagrams are encrypted before being scheduled to said output dataflow;

Another aspect of the invention concerns a packet-switched network comprising an emitting node according as previously defined. According to an embodiment of the invention, the packet-switched network comprises a plurality of subnetworks, each of them being operated by an entity, different for at least two of said subnetwork.

Another aspect of the invention concerns a method for emitting at the forwarding resources of an emitting node an output dataflow towards a receiving node, through a packet-switched network, said output dataflow being made of a sequence of output datagrams and said method comprising:
- determining for each of said output datagrams, emission dates corresponding to available windows of the forwarding resources of each nodes of a predetermined path between said emitting and receiving nodes, so as to constitute a coherent flow between said emitting and receiving nodes, and
- scheduling input datagrams corresponding to input dataflows, each input dataflow being associated with a requirement of quality of service, to said output dataflow according to said requirements.

Preferred embodiments comprise one or more of the following features, which can be taken separately or together, either in partial combination or in full combination:
- at least one of said input dataflow is a coherent flow;
- said emitting node detects that a given input dataflow cannot be scheduled to said output dataflow and informs the source of said input dataflow;
- said emitting node determines requirements of quality of service of at least one of said input dataflows;
- said emitting node receives requirements of quality of service of at least one of said input dataflows from the source of said at least one of said input dataflow;
- said input datagrams are encrypted before being scheduled to said output dataflow.

Another aspect of the invention concerns a computer programs comprising instructions for performing a method as previously defined, when deployed on a data computing unit of a network node.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows the contention of a node as a function of its load, in various situations, both according to prior art solutions and according to an embodiment of the invention.
Fig. 2 shows a very simplified example of a packet-switched communication network.
Fig. 3 shows the availability of the forwarding resources of nodes of a communication network, along the time, according to an embodiment of the invention.
Figs. 4a and 4b shows two possible embodiments for the determination of the emission dates.
Fig. 5 depicts an example of communication network on which a deterministic tunnel has been deployed.
Fig. 6 illustrates an example of scheduling according to an embodiment of the invention.
Fig. 7 shows the relationship between the numbers of radio units deployed on the field and the number of data centers required to perform computation for the radio units under latency constraints, both according to state-of-the-art QoS managing scheme and according to an embodiment of the invention.

### DETAILED DESCRIPTION OF THE INVENTION

A packed-switched communication network is depicted on FIG. 2. Its topology is very simplified for the purpose of clarity of the explanations. This packet-switched network comprises nodes N1, N2, N3, N4, i.e. network equipments through which are transmitted datagrams between an emitter, or source, and a receiver, or recipient. The emitter N1 and the receiver N4 can also be considered as nodes.

The expression "datagram" means here any atomic data transmission unit, or Protocol Data Unit (PDU), according to any layer, except the physical layer (layer 1). It comprises for instance IP packets (layer 3), frames (layer 2), TCP segments or UDP datagrams (layer 4), etc.

The transmission is typically performed along a predetermined path. In the example depicted on FIG. 2, this predetermined path is made of nodes N1, N2, N3, N4 in order. The way the dataflow, made of datagrams, is actually transmitted and routed through a path made of nodes is out of the scope of the invention, and, consequently, not further detailed. The way the path is predetermined is not detailed neither for the same reason.

The state-of-the-art solutions to convey datagrams over the communication network address the problem to react on contention issue, or to set priorities so that some dataflows are handled accordingly by network nodes. They are effective to fully load the network capacity, but this is made at the cost of packet losses in case of concomitant forwarding on a same output port (i.e. contention), that is mitigated by the possibility of buffering such datagrams. The delay for the output port to become available depends on the load, and typically after a given threshold for this delay, the datagrams are discarded and lost.

This behavior is based on the observation that datagrams follow a Poisson-based arrival process. From a statistical point of view, over a long period of time, the aggregated datagrams have a predictable behavior.

However, this is not sufficient as even priority datagrams suffer from contention, and, consequently, no maximum delay can be guaranteed for individual datagrams.

The solution of the invention relies on a paradigm change from statistical multiplexing to deterministic multiplexing and forwarding. Instead of trying to minimize the effect of the contention, one principle of the invention lies in avoiding any buffering of some datagrams associated with QoS requirements inside the network nodes so as no more collision and contention can happen. Accordingly, the invention is based on a breakthrough compared with state-of-the-art solutions trying to optimize the buffer usage.

According to the invention, the results depicted by curve 4 of FIG. 1 can be achieved. This curve 4, representing the latency curve for a node according to the invention, shows no queuing latency, regardless of the load of this node.

The principle of the invention can be understood with the help of the example depicted in FIG. 3. This example relies on the architecture depicted on FIG. 2. It should be understood, however, that this is just an example of architecture, and that the path between the emitting node N1 and the receiving node N4 can be more complex than in this example. Plus, the emitting and receiving nodes can be terminals, but also any nodes beholding to a communication network.

The invention lies in a method for emitting a datagram D at this emitting node N₁ to a receiving node N₄. As previously said, this datagram can be part of a dataflow made of several datagrams.

According to the invention, the method comprises the determination of an emission date tₑ for the datagrams, which corresponds to the available windows of the forwarding resources of each nodes of the path between the emitting and receiving node.

The first step consists in predetermining this path. This step is performed according to routing techniques well known in the art, and, for this reason, it will not be deeply described here.

Once this path determined, the emitting node N₁ should determine the availability of the forwarding resources of each nodes of the path. The path includes the emitting node N₁ itself, since its forwarding resources are impacted in the transmission of the datagram D from end to end. On the contrary, the receiving node N₄ is to be excluded of the predetermined path, since its forwarding resources are not impacted in the transmission of the datagram D. This is based on the fact that the underlying routing mechanism is based on output ports, and the path determined at the emitting node N₁ by the routing algorithms comprise typically the output port of N₁, N₂ and N₃.

Accordingly, the forwarding resources to be considered are those of N₁, N₂, N3.

However, the node N4 can be included into the determination of an emission date tₑ, so as to take into account the resources of N4, other than forwarding ones. This is the case for example to have the node N4 process the packet as soon as it is received. In this case, the processing resources availability of N4 will be included into the determination of tₑ.

FIG. 3 shows the availability of the forwarding resources of the nodes N₁, N₂, N₃ along the time. The hashed zones correspond to non availability of the corresponding forwarding resources, i.e. time periods during which the forwarding resources are reserved or busy transmitting other datagrams. The blank zones correspond, on the contrary, to time periods during which the corresponding forwarding resources are not assigned to any particular transmission tasks. They correspond thus to available windows during which any datagram D can be transmitted immediately, without any delay, and without going through any contention buffer.

For instance, the date t₁ corresponds to an available window of the forwarding resources for the nodes N₁ and N₂, but not of the node N₃. Therefore, the date t₁ does not correspond to an eligible available window for each node N₁, N₂, N₃, N₄ of the path.

The time window t₂-t₃ however corresponds to an available window of the forwarding resources of each of the nodes of the path.

In fact, it corresponds to the maximal available window, i.e. the dates t₂ and t₃ are selected so that dates out of the interval [t₂, t₃] correspond to unavailability of at least one forwarding resources. According to the invention, it is not necessary to determine the maximal available window, neither all the available windows: the determination of any available window (i.e. included into this maximal available window) is sufficient, but the wider it is, the more flexibility is granted to the method of the invention.

It should be further noted that the dotted lines corresponding to the dates t₁, t₂ and t₃ are oblique due to the delays at each node due to the transmission time between nodes. The angle α corresponds directly to the transmission delay of the datagram between two subsequent nodes. This angle is depicted as constant for the intelligibility of the figure, but in practice this angle α is not constant for each pair of subsequent nodes, since the distance between them is in general not constant.

The emission date tₑ is determined so as to correspond to this available window. The determination may take into account the transmission duration of the datagram, according to its size, so that the end of the transmission falls also inside the available window [t₂, t₃]

As a consequence, the datagram D is transmitted along the path without any delay due to contention buffer, since at each node, the forwarding resources are available for immediate emission.

According to an embodiment of the invention, the contention buffer can be bypassed, to optimize further the traversal time, and the datagram D can be directly transmitted to the corresponding output port upon its reception. This embodiment is possible if the datagram D can be determined by the node as requiring such an immediate treatment. This determination is possible especially when the datagram beholds to a dataflow already known as requiring this behavior.

In such case, even, the forwarding resource can be explicitly or implicitly reserved, locally, so as to keep the correspond windows available for the datagrams of this dataflow.

The available windows and the emission date tₑ can be determined by the emitting nodes N₁ by different ways.

For instance, the emitting node could be knowledgeable of the emission and reception dates of all traffic flowing through its forwarding resources, so that it can easily determine the remaining time periods, which correspond to available windows.

It can for instance be the case for Node B in a LTE (Long Term Evolution) network.

For the uplink case, because it grants accesses to the radio interface, the eNodeB can be aware of the time when datagrams are received from the User Equipments (UEs). Then, to forward data on the backhaul, the eNodeB computes the more appropriate temporal law that complies with the dates data are received from UEs, taking into account the backhaul network availability windows. Reciprocally, eNodeB takes into account the backhaul network availability windows to grant accesses to UEs. Globally, eNodeB computes a tradeoff between accesses grants on radio and temporal law computation, targeting to reduce latency.

For the downlink case, eNodeB manages the scheduling of the transmission of datagrams on the radio media. As the transmission is performed according to discrete time slots, the datagrams can be sent only at some discrete time slots. Then the eNodeB can compute a temporal law that complies at same time with these time slots and with the available windows, so as to forward data to the User Equipments without any contention.

Another possibility consists in designing a temporal law, at the emitting node N₁. This temporal law can be a periodicity (i.e. a streaming of one datagram every x milliseconds), but other temporal law can be designed. It defines a "coherent flow", i.e. a set of datagrams obeying to a temporal law.

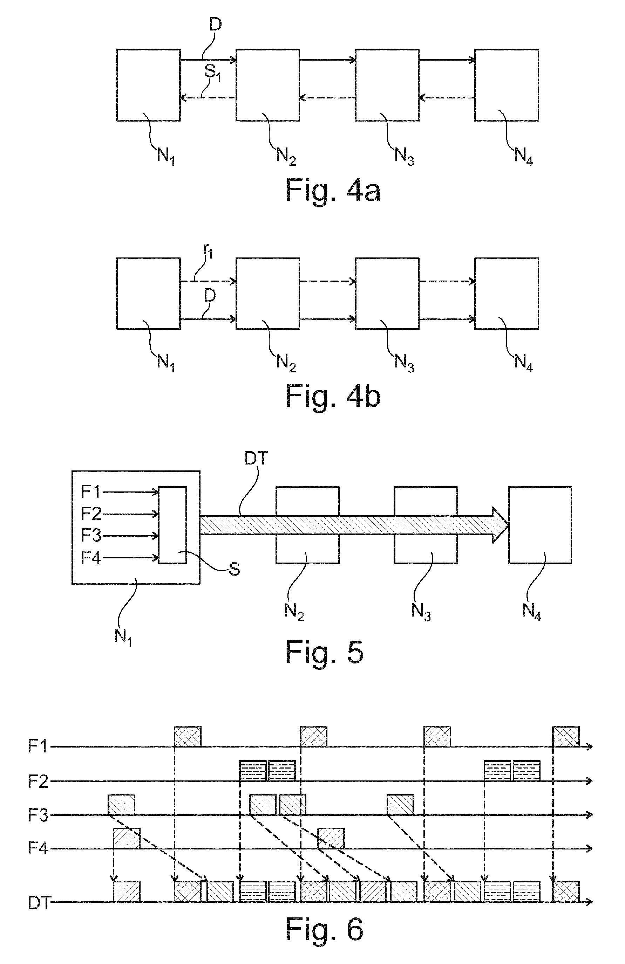

This temporal law can be designed by the emitting node and then transmitted, before the actual transmission of the datagram D, to the other nodes N₂, N₃, N₄ by a reservation message r₁ as depicted on FIG. 4b.

On reception of the reservation message r₁, the node on the path can make their forwarding resources available for the subsequent datagram D. The use of a temporal law allows reserving the forwarding resources for more than one datagram, but for several datagrams forming a coherent flow: each node on the path, knowing the temporal law, can determining the time windows it should make available for each datagram of the coherent flow.

Another solution is depicted by FIG. 4a and consists for the emitting node in determining the emission date tₑ by the reception of time information from other nodes of the path. This time information is contained by the signaling message s₁.

Each node N₂, N₃, N₄ can send an individual signaling message containing time information related to itself. In the case, the emitting node N₁ is in charge of compiling all time information to determine the appropriate emission date tₑ.

Alternatively, the signaling message s₁ is sent back by the receiving node N₄ and then hops backward from node to previous node until the emitting node N₁. In this case, the signaling message s₁ may be refined or enriched by each node along the path, so that the emitting node N₁ get the overall picture enabling it to determine an appropriate emission date tₑ.

This time information can contain data defining the time windows of the forwarding resources of the respective nodes.

According to an embodiment of the invention, the emission date tₑ is set according to a temporal law, and the time information contained in the signaling message s₁ is used in case of deviation of one of the node from the temporal law.

From the perspective of the other node of the path, i.e. nodes N₂, N₃, N₄, they can assume that they will receive the datagram D according to a temporal law known in advance and associated with a coherent flow.

According to the principles explained previously, these datagrams are received during an available window of the forwarding resources. Then the nodes are designed so that the datagram is immediately forwarded to the next node on the path, without any contention. It means that the datagrams D is not queued in any contention handling buffer, since the output interfaces of the nodes are already reserved for it at the date of reception. In other words, as belonging to a coherent flow, the received datagram is emitted at output interface at a date "known" before the arrival of the datagram on the input interface.

Processing the datagram and transmitting physically it from one interface to another interface takes the same time regardless of whether the node is loaded or not. This delay can be measured during a setup phase of the system and taken into account in the further treatments performed by the network nodes.

When the datagram is forwarded to the output interface of the forwarding resources for immediate transmission, two situations can occur:
- Either the forwarding resource is available (i.e. normal situation); and then the datagram is actually and immediately emitted.
- Or the output interface is not available, because other datagrams are under transmission.

In this latter case, a reservation conflict is detected, i.e. the date for the emission of this datagram is not appropriate according to the conditions of the forwarding resource. As the delay between the reception date and the emission date of this datagram is known for certain (as it only depends on internal and constant electronic latency), it then means that the reception date is not appropriate as it corresponds to an unavailable time window for the output interface of the forwarding resource.

According to an embodiment of the invention, a signaling message is sent back to the node which has emitted this datagram. Reverting back to FIG. 4a, if a reservation conflict is detected at node N₃, a signaling message will be sent back to the node N₂, which is the previous one in the path linking the source N1 to the recipient N₄.

Another type of reservation conflict may happen even if the output interface is available. It is the case when the node is knowledgeable of the temporal law associated with the coherent flow in which the received datagram belongs and when the reception date differs substantially from the conditions set by this temporal law.

A temporal law can be associated to a coherent flow in various ways, as already explained. Furthermore:
- it can be provisioned by an entity exterior to the node. It can be provisioned by out-of-band signaling from entities like a network management system; or by in-band signaling.
- it can be determined by the node itself by analyzing the incoming datagrams and by performing correlations with them, so as to determine patterns. This process can be performed at the same time at the detection of the coherent flows, so that both the detection and the temporal law are determined altogether.
- etc.

As it has been said previously, the temporal law can be periodic (one message every x milliseconds) but many other patterns can be designed or detected. In particular, in the case of aggregated coherent flows, the temporal law can be the aggregation of several signals with different characteristics (e.g. different periodicity) resulting in more complex temporal patterns.

It can be noted here that in the case of a new coherent flow, a node can need several datagrams before determining the temporal law, in the situation it is not known by signaling means.

From the temporal law, the node can determine when the next datagram of the associated coherent flow is expected to be received. It can reserve a time window in advance on the output interface according to this temporal law. Accordingly, time windows can be reserved not only for a received datagram, but also for the expected subsequent datagram belonging to the same coherent flow (and obeying to the same temporal law). In other words, the forwarding resource, including the output interface, is reserved for a datagram even before this datagram is received.

This is the reason why the node according to this embodiment of the invention does not need buffering datagrams to solve contention anymore and why the latency due to contention is cancelled.

In this embodiment, it should be noted that no explicit reservation is performed from outside (like e.g. with RSVP protocols and the like).

The datagram is forwarded to the output interface in order to be emitted during the time interval reserved according to this temporal law.

To be precise, due to the invention, a small deviation is implied in the definition of a "datagram": according to the RFC 1594 of the IETF (Internet Engineering Task Force), a datagram is "A self-contained, independent entity of data carrying sufficient information to be routed from the source to the destination computer without reliance on earlier exchanges between this source and destination computer and the transporting network.".

Due to the invention, there exists a reliance on earlier exchanges. In fact, the invention can be considered as a method and a device for enabling time-based forwarding (in contrast with address-based forwarding).

Accordingly, the node N₂, N₃, N₄ can easily determine whether an incoming datagram from a given coherent flow complies with the temporal law associated with this coherent flow. It can then determine any deviation of a coherent flow with its associated temporal law.

Such a deviation may be caused by a shift between clocks. Indeed, each nodes of a communication network comprise its own clock. In general, clocks of two given nodes of a network shift relatively to each other. Shift between two clocks may be characterized by time, phase but also frequency.

According to an embodiment of the invention, some deviation can be considered as minor, and should not imply any corrective actions.

The node can be adapted to determine the compliance of the reception date of a datagram to the temporal law with some flexibility. For instance, a difference can be determined between the reception date and an "expected reception date", directly derived from the temporal law. If this difference is below a threshold, no corrective action is triggered. The datagram is handled as if it was received precisely according to the temporal law.

In the contrary, a corrective action should be triggered. Important shifts may indeed cause several issues, including the datagram being considered as not belonging to the same coherent flow anymore. Furthermore, the shift may imply the reception of the datagram at a date when the output interface is not available, and may impact the overall behavior of the invention.

This corrective action comprises sending a signaling message back to the node which has emitted this datagram. As previously explained in relation with the reservation conflict implied by having an output interface unavailable at the required time, this signaling message is sent back to the immediate previous node in the path of the coherent flow.

In both cases, the signaling message aims at modifying the reception date of the subsequent datagrams beholding to the same coherent flow. Accordingly, it contains time information adapted for enabling the previous network node to modify its emission date tₑ, which directly corresponds to a modification of the reception date. This enables a compensation of the reservation conflict.

In case of a deviation from the temporal law, the time difference between the actual reception date and the expected reception date can serve as basis to determine the time information: it may be sufficient to set the time information at a value such as to compensate the time different, so that the next datagram of the coherent flow will be precisely aligned on the temporal law.

In practical, the temporal law can indicate the time difference (or its opposite), i.e. a relative value.

According to an embodiment of the invention, in case of unavailability of the output interface at the reserved time window, a new time window can be determined, during which the forwarding resource (including the output interface) will be available for the datagram.

The node can determine from the temporal laws stored in its memory, the overall availability of the forwarding resource. It can then deduce from this knowledge at which dates the output will be available for emitting the datagram. The date can be selected as the starting point of a time interval fitting this datagram, according to its size (and e.g. local parameters like the bitrate at the output interface, etc.),

This date can be communicated to the previous node by the signaling message. Here again, the time information can be relative to the date of arrival of the packets of the coherent flow.

According to another embodiment of the invention, a different temporal law can be designed by the node: the modification does not only impact a shift to a new date, but also the whole temporal patterns of the coherent flow can be modified: periodicity, etc.

Accordingly, the following datagrams of the coherent flow will be sent according to the modified temporal law (or simply with the same temporal pattern but shifted in time). They will be sent to be received on the output interface at a date where the output interface is available (i.e. during an available window) and will be actually forwarded without any latency due to contention.

In some cases, the output interface may not have any availability anymore, or, it may not have any availability dedicated to coherent flows. Indeed, according to an embodiment of the invention, it is possible to reserve a certain amount of resources dedicated to coherent flows; the rest being available for traffic with for example other Integrated or Differentiated Service class (IntServ/DiffServ).

In such situation, the datagram (and the associated coherent flow) can be downgraded to a best-effort behavior. This downgrading does not presume for the treatment performed by next nodes downstream on the path. For instance, some traffic shaping mechanisms can be implemented, so that "downgraded" datagrams can be detected as beholding to a coherent flow at such a downstream node.

In addition to the transmission of the signaling message, other actions are to be undertaken by the node, notably regarding the received datagram.

Especially in the case the datagram is received at a date when the output interface is unavailable, the datagram can be dropped. Such a solution is acceptable for some applications, like video conference, etc., and, for the overall behavior of the network, it is considered more efficient to allow a certain amount of message drops than to buffer them within the node, thus implying latency.

Another solution can be to transmit it. It can then be buffered according to legacy mechanism. If the datagram is tagged as belonging to a coherent flow, the tag can be removed. Another tag may be added for indicating it should be handled according to some Integrated or Differentiated Service class for instance.

When a reservation conflict occurs in a given node, a signaling message is sent to the previous node for modifying the reception date of the subsequent datagrams of the coherent flow. Such a modification can have some impacts on the conditions of this previous node: notably, if this node is according to this embodiment of the invention, this datagram is not buffered for contention purpose and, for it also, any change in its emission date implies a change in its reception date. Accordingly, the previous node also should send back a signaling message to its own previous node.

In the example of FIG. 4a, a signaling message is sent from node N₄ to node N₃, triggering a signaling message sent from node N₃ to node N₂, where it in turns trigger the signaling message s_{c} sent from node N₂ to node N₁.

At node N₁, which is the source of the coherent flow and implement the source application A, the signaling message may trigger sending an internal signaling message through the protocol stack up to the application A, which is deployed at the application layer.

The application can then adapt its transmission configuration according to the time information contained in the signaling message, as it has been explained previously

According to the invention and its embodiments, any reservation conflict at a given node of the transmission path is compensated upstream from neighbor to neighbor along the transmission path.

A compensation at a given node may imply a subsequent reservation conflict at an upstream node: for example, modifying the emission date can result in one or two nodes upstream to an emission at a date the output is unavailable. But this new reservation conflict can be also handled according to the invention, so that it can be corrected. In other words, an iterative process starts resulting in the one-by-one compensations of the reservation conflicts.

At the end, any reservation conflict can be corrected, and the coherent flows can be transmitted from end to end without contention in the traversed network nodes.

This is because at each node of the path, the output interfaces are reserved according to the temporal laws. The nodes do not need anymore to actually receive a datagram to reserve resources of the output interface. Accordingly the invention prevents to queue the received datagram to solve contention and the latency due to contention is canceled as shown at FIG. 1.

A coherent flow can thus be defined by an associated temporal law enabling each traversed network nodes to forecast, in a deterministic way, dates of arrival of datagrams, so as to avoid buffering them but directly schedule them to the output port, even in advance of their actual arrivals.

FIG. 5 depicts a packed-switched network deploying the mechanisms of the invention.

The emitting node N₁ has forwarding resources to emit an output dataflow to a receiving node N4 through this packet-switched network. This output dataflow is typically made of a sequence of output datagrams.

The emitting node can determine for each of the output datagrams, emission dates corresponding to available windows of the forwarding resources of each nodes N1, N2, N3 of a predetermined path between the emitting and receiving nodes. These emission dates determine a coherent flow between the emitting and receiving nodes. As explained before, the resources represented by the impacted nodes are reserved in advance, so that the traffic of this coherent flow does not depend on any other flows crossing the predetermined path.

Accordingly, a "deterministic tunnel" DT is made possible by this coherent flow created between emitting node N1 and receiving node N4.

This deterministic tunnel DT can then be used to convey QoS dataflows.

The emitting node N1 can then behold means S (or scheduler S) to receive input datagrams and to schedule them into the output coherent flow (enabling the deterministic tunnel DT). These input datagrams belong to input dataflows F1, F2, F3, F4.

The sources of these input dataflows can be applications sitting within the application layer of the emitting node N1, or coming from other upstream communication node.

These input dataflows can be associated with QoS requirements. QoS requirements can comprise parameters like maximum rates for packet losses, jitters, maximum admissible delay, etc.

The requirements of Quality of Service (QoS) associated with the input dataflows can be determined by the emitting node N1 according to various methods, including:
- receiving QoS requirements for a dataflow, in full or partly, from the source of this dataflow, e.g. by signaling messages;
- analyzing the input dataflow, so as to determine characteristics of the dataflow. QoS requirements can then directly be derived from the measured characteristics, so as to keep the QoS at the level received by the emitting node N1.

Other approaches are possible, as well as a mix of these two methods: for a given input dataflow only some QoS requirements are provided by the source, and some other may be determined by measurements and analyses.

Some input dataflow can be coherent flows as previously defined. They may be coherent flows inputted by an application located at the same emitting node N1, or transmitted from another node over a transmission network. It may even be a dataflow transmitted through a deterministic tunnel according to the invention, so that deterministic tunnels may be sequenced to link end nodes. In such a case the QoS requirements of these dataflows includes the respective temporal laws.

FIG. 6 depicts an example of scheduling of datagrams of the input dataflows F1, F2, F3, F4, by the means S of the emitting node N1, onto the deterministic tunnel DT.

The time line of the deterministic tunnel DT is based on relative time scale. The actual, or "absolute" emitting times of the datagrams of the output flow, determined as explained above, are not depicted on this figure for clarity reason. One can however keep in mind that the deterministic tunnel DT is not a continuous media but a sequence of time windows in the output port.

In this example, it is assumed that the dataflows F1 and F2 are coherent flows. Then, the receipts of the datagrams follow respective temporal laws, known by the scheduler S. As the times are known to the scheduler, it can reserve corresponding slots at the output deterministic tunnel DT. Accordingly, datagrams depicted on the time lines corresponding to dataflows F1 and F2 are replicated in the time-line of the deterministic tunnel DT. This replication is roughly illustrated by the dotted arrows, which are vertical for the coherent flows F1, F2.

The dataflows F3 and F4 are statistic dataflows, i.e. they are no coherent flows but statistically, they comply with some requirements of QoS. These requirements can be precisely known, as received from the sources, or estimated by analyzing the dataflow themselves, as described above.

For these dataflows, the scheduler S allocates the datagrams individually according to the QoS requirements of the corresponding dataflows to the available slots on the deterministic tunnel DT.

In the figures, the datagrams are forwarded in the free slots of the time line of the deterministic tunnel DT according to oblique dotted arrows. The QoS requirements enforce some criteria for these allocations, more specifically in terms of distance between subsequent datagrams along the time line, delay of buffering before scheduling (i.e. slope of the arrows), etc.

The mechanism performed by the scheduler S can be called "temporal encapsulation", as the datagrams are encapsulated into "time windows" available on the deterministic tunnel DT.

It may happen that some datagrams of a statistical dataflow F3, F4, cannot be scheduled. If QoS requirement on packet drops allows it, this datagram can be drop and not scheduled. The scheduler will then try to schedule the subsequent one of the same dataflow.

One very important advantage and feature of the invention is that the scheduler S at the emitting node N1 is knowledgeable about the characteristics of the deterministic tunnel DT. According to the input dataflows F1, F2, F3, F4 that it has to schedule into the deterministic tunnel DT, it can decide on their admission on not, according to this knowledge of the characteristics of the deterministic tunnel DT and to the individual QoS requirements of the intput dataflows.

In the example depicted on FIG. 6, as the scheduler S has the knowledge of the QoS requirements of all input dataflows F1, F2, F3, F4, it can determine whether it can schedule a new dataflow F5 which is submitted to the scheduler S

In this example, the scheduler can determine if the slot which is available between the first and second datagrams (in the bottom time line) is sufficient according to the characteristics of the dataflow F5, or, if some datagrams of the dataflows F3, F4 can be delayed while still be compliant with their respective QoS requirements.

If not, the scheduler may reject the dataflow F5.

So, the scheduler S is in position to determine by itself if input dataflows can be scheduled or not onto the output media constituted by the deterministic tunnel DT. In case an input dataflow cannot be scheduled, the scheduler S can inform the source of this dataflow.

The source can then decide on appropriate behavior like resubmitting the dataflow with degraded QoS requirements, submitting it to another deterministic tunnel or triggering the creation of a new deterministic tunnel, transmitting it according to state-of-the-art transmission mechanisms (Diffserv, best-effort, etc.)...

The scheduler can also apply some specific treatments on the datagrams scheduled to the deterministic tunnel DT. For instance, the datagrams can be encrypted before being scheduled to the output dataflow.

According to the invention, the scheduler S forms an entry point of a media fully knowledgeable of the conditions of this media so as to allow or deny new input dataflows.

It can also apply any QoS requirements, independently of the QoS mechanisms of the traversed network nodes. Therefore some customized and/or application-driven QoS mechanisms can be deployed, and the invention is not bound to the network equipments' limitation. New schemas can be deployed at the sole cost of updates of the schedulers S, which can be possibly made by the way of plug-in, and without any impact on standardization for defining new CoS (Class of Service) for instance.

Furthermore, the principle of the invention can apply when the emitting node is a virtual switch (vSwitch) and when the packed-switched network is internal to a physical equipment and links the vSwitch to the network card of the equipment, considered as a receiving node. In this particular embodiment, a deterministic tunnel DT can be constituted between the vSwitch and the network card to transport a coherent dataflow.

Another embodiment of the invention relates to infrastructures for Mobile Network Operators (MNO). According to some business models, the MNO does not own its own fixed network infrastructure but leases resources to a fixed operator and has little control over the QoS.

Thanks to the invention, it can lease deterministic tunnels to link the mobile stations together, as well to processing units located in data centers. Some further deterministic tunnels can also be deployed within the MNO-owned data centers, so as to guarantee no jitter from end to end (except, possibly, the last hop to the mobile terminal).

The latency constraints for the communication between the Radio units and the data centers (DC) are critical. Due to the latency and jitters implied by state-of-the-art transmission schemes, the distance between radio units and data centers should not be too large. Consequently, for a given network, the number of data centers DC should be increased to reduce the impact of jitter and latency within the data transmission.

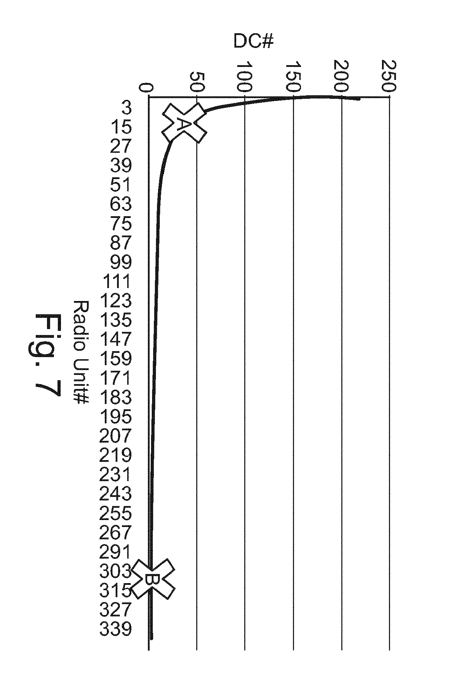

FIG. 7 shows the number of data centers DC needed to cover a 1000km² area. One assumes that the maximal acceptable latency/jitter is 300µs.

Point A represents the number of Data Centers DC needed to cover the area under this jitter constraint, according to state-of-the-art QoS mechanisms.

Point B represents this number when making use of deterministic tunnels according to the invention.

It then appears that a fronthaul relying on state-of-the-art mechanisms requires 12 times more Data Centers DC than a fronthaul relaying on deterministic tunnels. Furthermore, state-of-the-art mechanisms are based on dedicated network, whereas deterministic tunnels according to the invention works on a shared network and allows the MNO traffic coexists with other traffic (without the latter impacting the QoS of the former.)

Furthermore, in order to enhance privacy, the traffic between Data Centers DC and Radio Units can be encrypted before being scheduled into deterministic tunnels.

As bandwidth, latency and responsivity requirements are different for the control flows and for the data flows, the scheduler at entry points of the deterministic tunnels can accordingly schedule a control flow and a data flow associated with the respective QoS requirements.

As a deterministic tunnel keeps the QoS set at its entry point all across the share network without any involvement of the nodes, encrypted data sent by Data Centers can be received by the radio units with the appropriate QoS.

Another application of the principles of the invention addresses the problem for ensuring the QoS requirements for a flow traversing a multi-network architecture. The requirements need to be enforced in the radio, backhaul, metro, core networks. This raises many sub-issues like the need to comply to QoS classes compliant with all the traversed networks, and the interactions between all these networks and the user willing to provision this data flow.

The invention enables to solve this challenging issue, while reducing further the complexity for the users.

For example, a user has to transport flows requiring non-standard Qos. It can then develop a specific scheduler module fitting these QoS requirements, to manage the entry point of a deterministic tunnel. Then the deterministic tunnel handles the traffic across the networks, regardless of their technologies and constraints, until the endpoint, with the QoS fully managed by the user.

Moreover, as according to an embodiment of the invention, the scheduler may feedback information to the user, the applications can adapt their behavior for generating data flows dynamically to adapt the availability of the deterministic tunnel. This is possible in a deterministic way and without inquiring any nodes in the various traversed networks, but only the scheduler of the entry point.

This mechanism is independent on whether the traversed networks are managed by a same or by different operators. In the case where the networks are operated by different entities, the CoS definitions may vary from one network to another. Even for a given common CoS, some parameters of the nodes' configurations may vary according to the policy implemented by the operators, like for instance the size of the buffers. Accordingly, if relying on state-of-the-art mechanisms, the QoS could not be guaranteed, but by making use of a deterministic tunnel according to the invention, the QoS could be guaranteed whatever the QoS mechanisms deployed on the traversed networks.

The invention has been described with reference to preferred embodiments. However, many variations are possible within the scope of the invention.

## Claims

1. Emitting node (N1) of a packet-switched network having forwarding resources to emit an output dataflow (DT) to a receiving node (N4) through said packet-switched network, said output dataflow being made of a sequence of output datagrams and said emitting node being **characterized in that** it is adapted
- for determining for each of said output datagrams, emission dates corresponding to available windows of the forwarding resources of each nodes (N1, N2, N3) of a predetermined path between said emitting and receiving nodes, so as to constitute a coherent flow between said emitting and receiving nodes, and
- for scheduling input datagrams corresponding to input dataflows (F1, F2, F3, F4), each input dataflow being associated with a requirement of quality of service, to said output dataflow (DT) according to said requirements.

2. Emitting node according to claim 1, wherein at least one of said input dataflow is a coherent flow.

3. Emitting node according to claim 1 or 2, further adapted to detect that a given input dataflow cannot be scheduled to said output dataflow and to inform the source of said input dataflow.

4. Emitting node according to any of the previous claims, further adapted to determine requirements of quality of service of at least one of said input dataflows.

5. Emitting node according to any of the previous claims, further adapted to receive requirements of quality of service of at least one of said input dataflows from the source of said at least one of said input dataflow.

6. Emitting node according to any of the previous claims, wherein said input datagrams are encrypted before being scheduled to said output dataflow (DT).

7. Packet-switched network comprising an emitting node according to any of the previous claims.

8. Packet-switched network according to the previous claim, comprising a plurality of subnetworks, each of them being operated by an entity, different for at least two of said subnetwork.

9. Method for emitting at the forwarding resources of an emitting node (N1) an output dataflow (DT) towards a receiving node (N4), through a packet-switched network, said output dataflow being made of a sequence of output datagrams and said method comprising:
- determining for each of said output datagrams, emission dates corresponding to available windows of the forwarding resources of each nodes (N1, N2, N3) of a predetermined path between said emitting and receiving nodes, so as to constitute a coherent flow between said emitting and receiving nodes, and
- scheduling input datagrams corresponding to input dataflows (F1, F2, F3, F4), each input dataflow being associated with a requirement of quality of service, to said output dataflow (DT) according to said requirements.

10. Method according to claim 9, wherein at least one of said input dataflow is a coherent flow.

11. Method according to claim 9 or 10, wherein said emitting node detects that a given input dataflow cannot be scheduled to said output dataflow and informs the source of said input dataflow.

12. Method according to any of the claims 9 to 11, wherein said emitting node determines requirements of quality of service of at least one of said input dataflows.

13. Method according to any of the claims 9 to 12, wherein said emitting node receives requirements of quality of service of at least one of said input dataflows from the source of said at least one of said input dataflow.

14. Method according to any of the claims 9 to 13, wherein said input datagrams are encrypted before being scheduled to said output dataflow (DT).

15. Computer programs comprising instructions for performing a method according to any of claims 9 to 14, when deployed on a data computing unit of a network node.
